# EUROPEAN PATENT SPECIFICATION

(11) **EP 1 677 474 B1**
(45) Date of publication and mention of the grant of the patent: **26.03.2008**
(21) Application number: 05028651.7
(22) Date of filing: 29.12.2005
(51) Int. Cl.: H04L 12/58, H04L 29/06, H04Q 7/22

(54) **Method and device for multimedia messaging service**
Verfahren und Vorrichtung für einen Multimedianachrichtendienst
Procédé et dispositif d'un service de messagerie multimédia

(30) Priority: 31.12.2004 KR 2004118434
(43) Date of publication of application: 05.07.2006
(73) Proprietor: LG Electronics, Inc., Youngdungpo-gu Seoul 150-721 (KR)
(72) Inventor: Yang, Sung-Zoon, Incheon (KR)
(74) Representative: Katérle, Axel

(56) References cited:
- WO-A-20/04056067
- US-A1- 2004 148 400

## Description

### BACKGROUND OF THE INVENTION

### 1. Field of the Invention

The present invention relates to a multimedia messaging service (MMS) method of a mobile communication terminal and, more particularly, to a multimedia messaging service (MMS) method of a mobile communication terminal capable of providing a multimedia messaging service according to a streaming method.

### 2. Description of the Related Art

Recently, the development of mobile communication systems enables transmission of data at a high speed, and as mobile communication terminals have been improved to allow multimedia data playback, a multimedia messaging service (MMS) allowing transmission of a message including various multimedia files (such as images, photos, music or voice clips and even videos), which are not available through the existing short messaging service (SMS), is being widely used.

The multimedia message provided through the MMS has a relatively large size, thus it cannot be directly transmitted to a recipient terminal like a short message provided through the SMS. Thus, in the MMS, a multimedia message transmitted from an originator terminal is first uploaded to a multimedia messaging service center (MMSC), and then the MMSC downloads the uploaded multimedia message to the recipient terminal, so that the multimedia message can be stored in the recipient terminal and contents of the stored multimedia message can be checked thereafter.

In other words, when a multimedia message is transmitted from an originator terminal to the recipient terminal, it is first actually stored in the MMSC and the MMSC then requests a short message service center (SMSC) to transmit a notification message, which informs the subscriber (namely, the recipient) of the recipient terminal that the multimedia message has been received.

Upon receiving the request for transmission of the notification message, the SMSC transmits an announcement message (namely, an MMS notification message) to the recipient terminal to thus inform the recipient that the multimedia message has been transmitted from the originator and at the same time asks whether the recipient wants to receive the multimedia message. Then, when the recipient checks the notification message and instructs transmission of the multimedia message to the recipient terminal, the recipient terminal downloads the multimedia message from the MMSC.

Document US 2004/0148400 A1 discloses a multimedia messaging service, in which a user agent is notified of availability of a multimedia message and subsequently, after the user agent has sent a retrieve request, a streamable media component of a multimedia message is streamed to the user agent in a streaming session. The document relates in particular to downloading of both streamable and non-streamable media components in a consistent manner.

Document WO 2004/056067 A1 relates to a method and a system for a multimedia messaging service. The beginning part of a multimedia message is delivered beforehand to a mobile terminal. In case a user of the mobile terminal wants to view the message, the portion of the message which was sent beforehand and stored locally on the mobile terminal will be played back immediately, while at the same time a user agent residing in the mobile terminal contacts a media server for the remaining contents using a streaming technology.

### BRIEF DESCRIPTION OF THE INVENTION

One aspect of the invention relates to the recognition by the present inventors of the following drawbacks in the related art.

The related art multimedia message receiving method is an "indirect" transmission method, which is used when the recipient terminal is working on a different task. That is, if the recipient terminal receives a large size multimedia message (or a large number of multiple multimedia messages) while performing a different task, a loss of data can occur because such multimedia message(s) may not be properly received. Additionally, although the downloading fees for a multimedia message may be rather expensive, if a communication environment of a cell in which the recipient terminal is located in is not good, the multimedia message may be lost during the downloading process, but the user would nonetheless still be charged for such unsuccessful downloading.

In the related art multimedia message receiving method, the entire multimedia message as received is stored in a non-volatile memory of the recipient terminal. However, if the size of the multimedia message to be stored is greater than the storage capacity of the non-volatile memory, the multimedia message cannot be properly downloaded.

In addition, since a multimedia message can hold a great amount of information, there is a high possibility that such may be used to send undesirable content (e.g., spam messages, software viruses, etc.), which would cause damage to the hardware and/or software of the mobile terminal or cause inconveniences to the user.

In other words, the related art multimedia message receiving method has a problem that it is difficult to check whether the received multimedia message is actually a spam message unless the recipient downloads the received multimedia message and then checks its content. That is, the recipient has no choice but to download the high-priced multimedia message and checks whether it is a spam message or not.

Therefore, one object of the present invention is to provide a multimedia messaging service method of a mobile communication terminal by which if a received multimedia message is or likely to be a spam message, the streaming rate and/or the buffer capacity of a recipient terminal are set at their lowest levels such that only minimum packet data is received to thus minimize unnecessary fees being charged to the user when undesirable messages (i.e., spam) is received.

Another object of the present invention is to provide a multimedia messaging service method of a mobile communication terminal by which although a received multimedia message cannot be entirely downloaded due to lack of memory capacity in a recipient terminal, sufficient portions of the multimedia message can be streamingly received for the purpose of allowing its content to be checked.

To achieve these and other advantages and in accordance with the purpose of the present invention, as embodied and broadly described herein, there is provided a multimedia messaging service method of a mobile communication terminal comprising: receiving message information extracted from a multimedia message by a multimedia messaging service center; setting a streaming rate and buffer size based on the received message information; and receiving the multimedia message according to the set streaming rate and buffer size.

To achieve the above objects, there is also provided a user terminal comprising: a transceiver to transmit and receive signals with a network; a buffer to store various information; and a processor cooperating with the transceiver and the buffer to operate in a multimedia messaging service reception mode comprising, receiving message information extracted from a multimedia message by the network, setting a streaming rate and buffer size based on the received message information, and receiving the multimedia message according to the set streaming rate and buffer size.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 illustrates elements of an exemplary multimedia messaging system and an exemplary signal flow between the elements in accordance with the present invention;
FIG. 2 is a flow chart illustrating the exemplary processes of a multimedia messaging service method of the multimedia messaging system in accordance with the present invention; and
FIG.3 illustrates a block diagram of an exemplary mobile communication terminal providing a multimedia messaging service method in accordance with the present invention.

### DETAILED DESCRIPTION OF THE INVENTION

A multimedia messaging service method and a user mobile communication terminal providing the multimedia messaging service method, capable of reducing an unnecessary fee charge according to streaming by setting a streaming rate and a buffer size at a minimum level of a recipient terminal and streaming a multimedia message when the multimedia message is or highly likely to be a spam message (or contain undesirable content), and capable of receiving the multimedia message by the recipient terminal according to a streaming method and checking its content when the size of the multimedia message is smaller than a remaining space of a memory of the recipient terminal, in accordance with the present invention will now be described with reference to the accompanying drawings.

Here, a multimedia messaging service (MMS) refers to providing still images, video messages, video conferencing, etc. that employ multimedia data processing (e.g., providing MPEG-4 solutions, etc.) via mobile communication network technologies (e.g., 2.5G networks, 3G networks, 4G networks, etc.), as well as various types of wireless access technologies (e.g., Wi-Fi, Wi-Max, Wi-Bro, etc.).

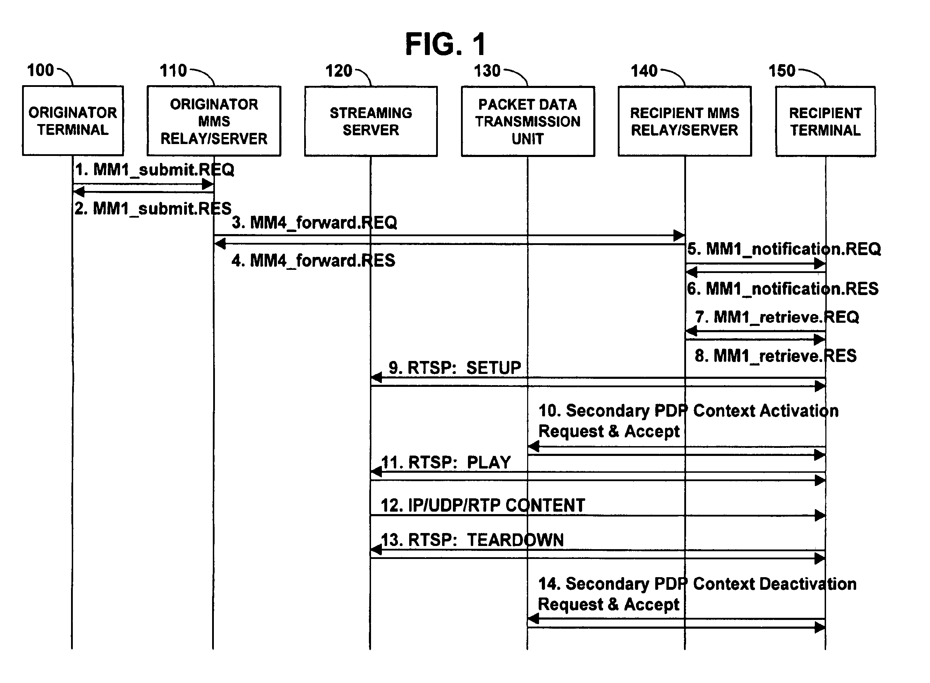

FIG. 1 illustrates elements of an exemplary multimedia messaging system for implementing a multimedia messaging service method of a mobile communication terminal and an exemplary signal flow between the elements in accordance with the present invention.

As shown in FIG. 1, a multimedia messaging system in accordance with the present invention may include: an originator terminal 100 having an originator MMS User Agent (UA) therein; an originator MMS relay/server 110; a streaming server 120; a packet data transmission unit 130; a recipient MMS relay/server 140; and a recipient terminal 150 having a recipient MMS UA therein.

The originator terminal 100 creates a multimedia message through the originator MMS UA and transmits the created multimedia message to the originator MMS relay/server 110.

The originator MMS relay/server 110 receives the multimedia message from the originator terminal 100 (namely, the originator MMS UA), and transmits it to the recipient MMS relay/server 140 where the recipient terminal 150 belongs.

Subsequently, the recipient MMS relay/server 140 receives the multimedia message transmitted from the originator MMS relay/server 140, and stores it, and when reception of the multimedia message is completed, the recipient MMS relay/server analyzes the received multimedia message, extracts information about the received multimedia message (such as a message type, a message size, an originator of the message, an effective term of the message, etc.), adds the extracted information on the multimedia message in a notification message informing a recipient about the arrival of the multimedia message, and transmits the notification message to the recipient terminal 150.

The recipient MMS relay/server 140 can download the stored multimedia message to the recipient terminal 150 according to a request from the recipient terminal 150, or transfers the stored multimedia message to the streaming server 120, so that the streaming server 120 can convert it into streaming data and transfer the converted multimedia message to the recipient terminal 150 in a streaming manner.

When the recipient terminal 150 receives the notification message from the recipient MMS relay/server 140, the multimedia message undergoes a checking procedure by the recipient, and the recipient terminal 150 is connected with the recipient MMS relay/server 140 to download the multimedia message stored in the recipient MSM relay/server 140 or receives the multimedia message which has been converted into streaming data from the streaming server 120 in a streaming manner, whereby the recipient can check the contents of the multimedia message.

In addition, when the recipient terminal 150 receives the notification message from the recipient MMS relay/server 140, it compares the size of the multimedia message of the message information included in the notification message and the size of a remaining space of the memory of the recipient terminal 150. When the size of the multimedia message is greater than the size of the remaining space of the memory, the recipient terminal 150 provides a message to the recipient to recommend that the recipient receive and check the content of the multimedia message by using a streaming manner. If the size of the multimedia message is not greater than the size of the remaining space of the memory, the recipient terminal 150 provides a message for recommending that the recipient select one of the streaming method, the downloading method and some other method to check the content of the multimedia message to the recipient.

Here, the "streaming" method refers to providing the multimedia message to the mobile terminal at the same time displaying it in real time, or storing only a portion of data of the provided multimedia message in the mobile terminal and at the same time displaying it, while the "downloading" method refers to providing the entirety of the multimedia message to the mobile terminal and storing the entire data of the provided multimedia message in the mobile terminal.

When the recipient terminal 150 wants to receive the multimedia message in the streaming method to check its contents, the streaming server 120 converts the multimedia message stored in the recipient MMS relay/server 140 into streaming transmission service type data according to a request from the recipient terminal 150, and transmits the converted streaming data to the recipient terminal 150 according to a streaming protocol.

The packet data transmission unit 130 (e.g., an SGSN (Serving GPRS (General Packet Radio Service) Support Node)) is used to provide the multimedia message to the recipient terminal 150 according to a packet data protocol in a packet transmission method, when the multimedia message is transmitted to the recipient terminal 150 according to the downloading method, the streaming method or some other method.

The multimedia messaging system for implementing the multimedia messaging service method of the mobile communication terminal divides the multimedia messaging service center (MMSC) into an originator side and a recipient side, and as shown in FIG. 1, the originator MMS relay/server 110 and the recipient MMS relay/server 140 are separately shown. Herein, the originator MMS relay/server 110 and the recipient MMS relay/server 140 can be the same server or different servers that are located at different parts of the network.

The multimedia messaging service method of the mobile communication terminal will now be described in more detail with reference to FIG. 1.

First, the originator terminal 100 (namely, originator MMS UA) transmits a created multimedia message to the originator MMS relay/server 110, and requests the originator MMS relay/server 110 to transmit the multimedia message to the recipient terminal 150 (i.e., the recipient MMS UA) (1. MM1_submit.REQ).

The originator MMS relay/serer 110 receives the multimedia message from the terminal 100, receives the request for transmission of the multimedia message, and respond to the transmission request (2. MM1_submit.RES).

Subsequently, the originator MMS relay/server 110 forwards the multimedia message to the recipient MMS relay/server 140 that serves the recipient terminal 150 according to the request for transmission of the multimedia message from the originator terminal 100 (3. MM4_forward.REQ).

The recipient MMS relay/serer 140 receives the multimedia message from the originator MMS relay/serer 110, and then, informs the originator MMS relay/server 110 that the multimedia message has been normally received (4. MM4_forward.RES).

Subsequently, the recipient MMS relay/server 140 analyzes the multimedia message received from the originator MMS relay/server 110, extracts a message class (e.g., a personal message, a spam message (i.e., an advertisement message), an information service message, etc.), a message type, a transmission ID, an MMS version, a message size, an expiration date, a message reference (e.g., a URI), a title, an importance level, an address of originator, and the like, adds the extracted message information in a notification message informing the recipient that the multimedia message has been received, and transmits it to the recipient terminal 150 (5. MM1_notification.REQ).

When the recipient terminal 150 receives the notification message from the recipient MMS relay/server 140, it informs the recipient MMS relay/server 140 that the notification message has been normally received, and provides the notification message and the information of the multimedia message included in the notification message to the recipient, so that the recipient can determine whether to check the multimedia message (6. MM1_notification.RES).

Here, if the recipient determines to check the multimedia message, the recipient terminal 150 compares the message size of the information of the multimedia message included in the notification message and the size of the remaining space of the memory of the recipient terminal 150. If the remaining space of the memory of the recipient terminal 150 is smaller than the size of the multimedia message, the recipient terminal 150 receives the multimedia message according to the streaming method (rather than the downloading method), and provides a message to the recipient recommending that the contents should be checked. If the size of the remaining space of the memory is greater than the size of the multimedia message, the recipient can be informed so that he can select either the downloading method or the streaming method as the operation mode (namely, a multimedia message check mode) for checking the received multimedia message. Preferably, the operation mode for checking the received multimedia message can employ other methods besides the downloading method and the streaming method.

The recipient terminal 150 informs the recipient MMS relay/server 140 that the notification message has been normally received, and transmits a multimedia message check request message including the information on the multimedia message check mode (which refers to streaming or downloading) to the reception MMS relay/server 140 (7.MM1_retrieve.REQ). Then, the recipient MMS relay/server 140 transmits a response message with respect to the multimedia message check request message to the recipient terminal 150 (8. MM1_retrieve.RES).

Here, if the recipient selects the streaming method to check the multimedia message (namely, the multimedia message check mode = streaming), the recipient MMS relay/server 140 adds an SDP (Session Description Protocol) file in the response message with respect to the multimedia message check request message and transmits it to the recipient terminal 150. The SDP file includes information on the data to be streamed such as descriptions for a session for the streaming service, the media type, the media transmission rate, etc.

Meanwhile, if the recipient selects the downloading method to check the multimedia message, the recipient MMS relay/server 140 downloads the multimedia message stored in the recipient MMS relay/server 140.

When the recipient terminal 150 requests to receive the multimedia message according to the streaming method, a real-time streaming protocol (RTSP) is set between the recipient terminal 150 and the streaming server 120 to set up a session for the streaming service. At this time, the streaming rate (Quality of Service (QoS)) and the buffer size are determined (9. RTSP:SETUP).

Here, the session of the streaming service through setting of the RTSP can be set as an optimum streaming rate and the buffer size are automatically determined according to a state (condition) of the recipient terminal 150 and a state (condition) of the communication network. In this respect, however, in the present invention, the recipient terminal 150 checks the multimedia message information included in the notification message provided by the reception MMS relay/server 140, and if the received multimedia message is found to be a spam message, the streaming rate is automatically set as a minimum size to receive the multimedia message or the recipient can personally check the multimedia message information included in the notification message to determine whether the received multimedia message is a spam message or not so that he can personally select the streaming rate and the buffer size. Herein, if the multimedia message is checked to be a spam message, the streaming rate may be automatically set to be the minimum size to receive it as follows. For example, if the recipient terminal 150 provides a streaming service at transmission rates of 384 Kbps, 128 Kbps, 64 Kbps and 32 Kbps and a current basic streaming rate is set as 128 Kbps, the recipient terminal 150 automatically sets the streaming rate as 32 Kbps, so that it can receive the multimedia message at the minimum streaming rate of the recipient terminal 150.

In addition, when the received multimedia message is dubious and thus considered to likely be a spam message, the streaming rate and the buffer size can be forcibly set to be the minimum to receive the multimedia message according to streaming method to check its content, and the streaming rate and the buffer size can be re-set based on the content. For example, while the content of the multimedia message is being checked according to the streaming method, if the multimedia message is determined not to be a spam message, the streaming rate and the buffer size can be increased during the streaming.

Accordingly, since the recipient can set the streaming rate and the buffer size, unnecessary charging of fees can be prevented or minimized.

When the session for the streaming service is completely set up between the recipient terminal 150 and the streaming server 120, the recipient terminal 150 requests activation of a packet data protocol (PDP) to the packet data transmission unit 130 to receive the data of the multimedia message which has been converted into the streaming data by the streaming server 120 as a packet-based data service, and the packet data transmission unit (SGSN) 130 activates the PDP and sets up a session for the packet data transmission service (10. Secondary PDP context activation request & accept).

After the session for the packet data transmission service is set up, when the recipient terminal 150 requests the streaming server 120 to transmit the streaming data (11. RTSP: PLAY), the streaming server 120 transmits the streaming data to the recipient terminal 150 by using a protocol such as the IP (Internet Protocol), a UDP (User Datagram Protocol) or an RTP (Real-time Transport Protocol) (12. IP/UDP/RTP content).

When the streaming of the multimedia is finished, the recipient terminal 150 transmits a streaming service termination message to the streaming server 120, to release the session for the streaming service (13. RTSP: TEARDOWN).

Subsequently, the recipient terminal 150 requests de-activation of the PDP from the packet data transmission unit 130, and the packet data transmission unit 130 de-activates the PDP, thereby terminating the process of checking the multimedia message according to the packet data-based streaming service (14. Secondary PDP context de-activation request & accept).

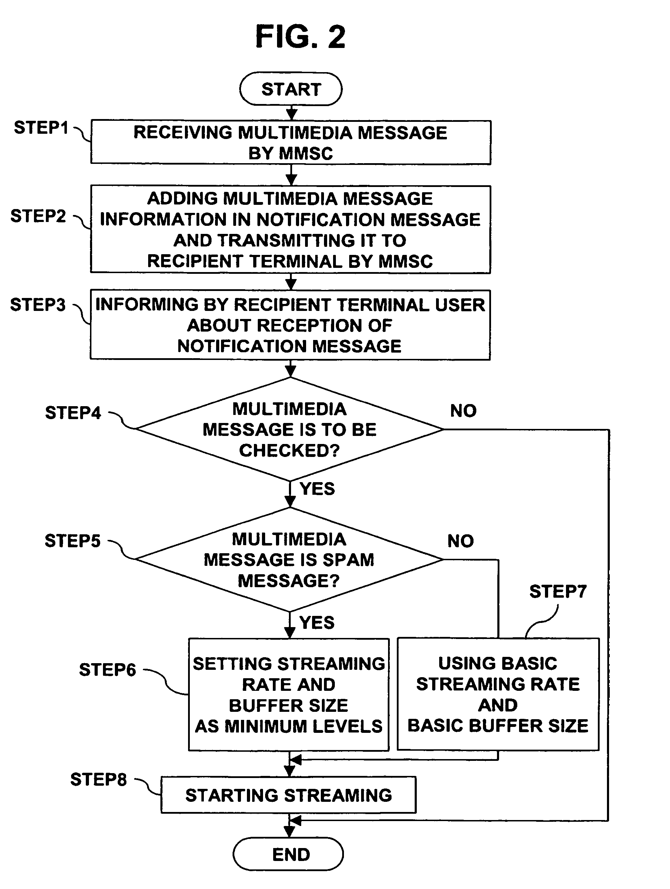

The multimedia messaging service method of the mobile communication terminal in accordance with the present invention will now be described with reference to FIG. 2.

FIG. 2 is a flow chart illustrating the processes of an exemplary multimedia messaging service method of the multimedia messaging system in accordance with the present invention.

As shown in FIG. 2, when the MMSC (Multimedia Messaging Service Center) including the originator MMS relay/server 110 and the recipient MMS relay/server 140 receives a multimedia message (step S1), it analyzes the received multimedia message to extract information on the received multimedia message (such as a type of the message, a size of the message, an originator of the message, an expiration date of the message, a title of the message, etc.), adds the extracted information in a notification message, and transmits the notification message to the recipient terminal 150 (step S2).

When the recipient terminal 150 receives the notification message from the MMSC (namely, the recipient MMS relay/server 140), it informs the recipient about the reception of the multimedia message.

When the recipient checks the contents of the notification message and instructs the recipient terminal 150 to check the received multimedia message, the recipient terminal 150 determines whether the received multimedia message is a spam message or not, and when the recipients instructs the recipient terminal 150 not to check the received multimedia message, the recipient terminal 150 terminates the multimedia message checking process (step S4).

Here, in the step of determining whether the received multimedia message is a spam message or not, the recipient can personally determine the type of the multimedia message based on the multimedia message information added in the notification message provided from the MMSC or the recipient terminal 150 can automatically determine the type of the multimedia message based on a result of analysis on the type of the multimedia message by the MMSC included in the notification message (step S5).

When the received multimedia message is determined to be a spam message, the recipient terminal 150 sets the streaming rate and the buffer size to be the minimum and requests the streaming server 120 to stream the multimedia message (step S5 → step S6).

If, however, the received multimedia message is not a spam message, the recipient terminal 150 requests the streaming server 120 to stream the received multimedia message (namely, the normal message) by using a pre-set streaming rate and a pre-set buffer size (basically set streaming rate and buffer size) (step S5 → step S7).

Subsequently, according to the streaming requests, the streaming server 120 receives the multimedia message from the MMSC, converts it into streaming data, and streams the converted multimedia message to the reception terminal 150 (step S8).

Although not shown, if the multimedia message is determined not to be a spam message and thus it is checked at the pre-set streaming rate and buffer size, but at this time, if the multimedia message is determined to be a spam message while it is being checked at the pre-se streaming rate and buffer size, streaming of the multimedia message can be terminated.

Conversely, when the multimedia message is determined to be a spam message and thus streamed at a minimum streaming rate and minimum buffer size to check its content, during which, however, if the multimedia message is determined not to be the spam message, the streaming rate and the buffer size can be manually adjusted up or automatically re-set.

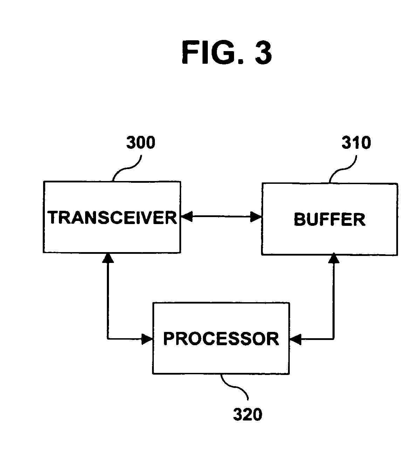

A user terminal in accordance with the present invention will now be described with reference to FIG. 3.

FIG.3 illustrates a block diagram of an exemplary mobile communication terminal providing a multimedia messaging service method in accordance with the present invention.

The present invention provides a user terminal comprising: a transceiver 300 to transmit and receive signals with a network; a buffer 310 to store various information; and a processor 320 cooperating with the transceiver 300 and the buffer 310 to operate in a multimedia messaging service reception mode comprising the steps of, receiving notification from the network that another user terminal sent a multimedia message, the notification including information about the multimedia message, checking whether the multimedia message contains undesirable content based upon the information about the multimedia message, and receiving the multimedia message via a streaming method, a downloading method, or another method according to the received notification and checking.

The checking may be performed automatically by the processor 320 or performed upon receiving user input. If the user input indicates that a content of the multimedia message should be checked, the processor 320 may compare a size of the multimedia message with a size of available memory in the buffer 310. The multimedia message may be received via the streaming method, if the available memory cannot accommodate the multimedia message.

The present invention further comprises: allowing the user to choose whether to receive the multimedia message via the streaming method, the downloading method or another method, if the available memory can accommodate the multimedia message.

If the user selects the streaming method, an optimum streaming rate and buffer size may be determined according to conditions of the user terminal and conditions of the network. The processor 320 may check the information about the multimedia message, and if the multimedia message contains undesirable content, a streaming rate and buffer size for the streaming method are automatically set to their minimum values and the multimedia message is received via the streaming method. The user is allowed to check the information about the multimedia message, and if the multimedia message contains undesirable content, a streaming rate and buffer size for the streaming method are set by the user and the multimedia message is received via the streaming method. The processor 320 may check the information about the multimedia message, and if the multimedia message potentially contains undesirable content, a streaming rate and buffer size for the streaming method are initially set to their minimum values and the multimedia message is received via the streaming method. The minimum values can be later adjusted automatically or by the user to higher values during streaming reception if the multimedia message does not contain undesirable content, or the streaming can be terminated if the multimedia message does contain undesirable content. If the multimedia message does not contain undesirable content, the downloading method or another method, excluding the streaming method is used receiving the multimedia message. If the multimedia message does not contain undesirable content, the streaming method is used receiving the multimedia message, and an optimum streaming rate and buffer size are determined according to conditions of the user terminal and conditions of the network, or a pre-set streaming rate and buffer size are used.

The processor 320 may further cooperate with the transceiver 300 and the buffer 310 to operate in a multimedia messaging service transmission mode comprising the steps of, composing a multimedia message, and sending the composed multimedia message to another user terminal via the network to allow checking of whether the multimedia message contains undesirable content based upon information about the multimedia message, such that the another user terminal can receive the multimedia message via a streaming method, a downloading method, or another method. If the another user terminal decides to receive the multimedia message via the network, the another user terminal sets a streaming rate and buffer size based on a extracted message information from the composed multimedia message by the network, and receives the multimedia message according to the set streaming rate and buffer size via a streaming method.

As so far described, the multimedia messaging service method of the mobile communication terminal in accordance with the present invention has many advantages.

That is, first, when the received multimedia message is determined to be a spam message or a message dubiously considered as a spam message, the streaming rate and the buffer size of the reception terminal are set to be the minimum to receive the multimedia message via streaming. Accordingly, since only the minimum amount of packet data is received, the user can minimize any fees that may be charged to him.

Second, although the received multimedia message may not be entirely downloaded because of a shortage of memory capacity of the recipient terminal, the received multimedia message can be streamed and its content can be checked.

Third, a spam message or a message dubiously considered as a spam message is streamed at the minimum streaming rate and with the minimum buffer size to check its content. Thus, a load that may be generated by downloading a large amount of spam message by the recipient terminal can be reduced.

As the present invention may be embodied in several forms without departing from the scope thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalence of such metes and bounds are therefore intended to be embraced by the appended claims.

## Claims

1. A multimedia messaging service method of a mobile communication terminal comprising:
receiving message information extracted from a multimedia message by a multimedia messaging service center (STEP1) **characterized by**:
setting a streaming rate and buffer size based on the received message information (STEP6, STEP7); and
receiving the multimedia message according to the set streaming rate and buffer size.

2. The method of claim 1, wherein, in the step of setting the streaming rate and buffer size based on the received message information (STEP6, STEP7), if the message information indicates that the multimedia message is a spam message or is dubiously considered as a spam message (STEP5), the streaming rate and buffer size are set to first pre-set values (STEP6), whereas if the message information indicates that the multimedia message is neither a spam message nor considered as a spam message, the streaming rate and buffer size are set to second pre-set values (STEP7).

3. The method of claim 1, wherein the step of setting the streaming rate and buffer size based on the received message information (STEP6, STEP7) comprises:
receiving a result determined by a recipient as to whether the multimedia message is a spam message or not based on the message information; and
setting the streaming rate and buffer size as first pre-set values if the multimedia message is a spam message (STEP6), and setting the streaming rate and buffer size as second pre-set values if the multimedia message is not a spam message (STEP7).

4. The method of claim 3, wherein the message information includes at least one or more of a message class, a message type, a transmission ID, an MMS version, a message size, an expiration date, a message reference, a title, an importance level, information of an originator.

5. The method of claim 1, wherein the message information includes at least one or more of a message class, a message type, a transmission ID, an MMS version, a message size, an expiration date, a message reference, a title, an importance level, information of an originator.

6. The method of claim 1, wherein the message information is included in a notification message informing the recipient that the multimedia messaging service center has received the multimedia message.

7. The method of claim 1, wherein the step of receiving the multimedia message according to the set streaming rate and buffer size comprises:
converting the multimedia message into streaming data through a streaming server; and
streaming the converted streaming data according to the set streaming rate and buffer size (STEP8).

8. The method of claim 7, wherein the step of converting the multimedia message into the streaming data through the streaming server comprises:
converting a multimedia file included in the multimedia message into the streaming data.

9. The method of claim 7, wherein the step of streaming the converted streaming data according to the set streaming rate and buffer size (STEP8) is associated with a packet data transmission unit.

10. The method of claim 9, wherein the packet data transmission unit is a serving GPRS support node, SGSN.

11. The method of claim 1, further comprising:
adjusting the streaming rate and buffer size according to an instruction of the recipient while the multimedia message is being streamed.

12. The method of claim 11, wherein, in the step of adjusting the streaming rate and buffer size, when the multimedia message is determined not to be a spam message while the multimedia message is being streamed, the streaming rate and buffer size are adjusted to be increased.

13. The method of claim 1, further comprising:
comparing a message size among the information of the multimedia message included in the message information with a size of a remaining space of a memory of the mobile communication terminal; and
receiving the multimedia message according to a streaming method when the message size is greater than the size of the remaining space of the memory.

14. The method of claim 2, wherein the first pre-set values are a minimum streaming rate and buffer size of the mobile communication terminal and the second pre-set values are a basic streaming rate and buffer size of the mobile communication terminal.

15. The method of claim 3, wherein the first pre-set values are a minimum streaming rate and buffer size of the mobile communication terminal and the second pre-set values are a basic streaming rate and buffer size of the mobile communication terminal.

16. A user terminal comprising:
a transceiver (300) to transmit and receive signals with a network;
a buffer (310) to store various information; and
a processor (320) cooperating with the transceiver (300) and the buffer (310) to operate in a multimedia messaging service reception mode **characterized by**:
receiving message information extracted from a multimedia message by the network,
setting a streaming rate and buffer size based on the received message information, and
receiving the multimedia message according to the set streaming rate and buffer size.

17. The terminal of claim 16, wherein the setting is performed automatically by the processor (320) or performed upon receiving user input.

18. The terminal of claim 17, wherein, if the user input indicates that the multimedia message contains undesirable content, the processor (320) sets the streaming rate and buffer size to their minimum values.

19. The terminal of claim 17, wherein, if the user input indicates that the multimedia message contains undesirable content, an optimum streaming rate and buffer size are determined according to conditions of the user terminal and conditions of the network.

20. The terminal of claim 17, wherein the processor (320) checks the message information, and if the multimedia message contains undesirable content, the streaming rate and buffer size are automatically set to their minimum values and the multimedia message is received via a streaming method.

21. The terminal of claim 17, wherein the user is allowed to check the message information, and if the multimedia message contains undesirable content, the streaming rate and buffer size are set by the user and the multimedia message is received via a streaming method.

22. The terminal of claim 17, wherein the processor (320) checks the message information, and if the multimedia message potentially contains undesirable content, the streaming rate and buffer size are initially set to their minimum values and the multimedia message is received via a streaming method.

23. The terminal of claim 22, wherein the minimum values can be later adjusted automatically or by the user to higher values during streaming reception if the multimedia message does not contain undesirable content, or the streaming method can be terminated if the multimedia message does contain undesirable content.

24. The terminal of claim 17, wherein if the multimedia message does not contain undesirable content, a streaming method is used receiving the multimedia message, and an optimum streaming rate and buffer size are determined according to conditions of the user terminal and conditions of the network, or a pre-set streaming rate and buffer size are used.

25. The terminal of claim 16, wherein the processor (320) further cooperates with the transceiver (300) and the buffer (310) to operate in a multimedia messaging service transmission mode comprising the steps of,
composing a multimedia message, and
sending the composed multimedia message to another user terminal via the network.

## Patentansprüche

1. Multimedianachrichtendienstverfahren für ein mobiles Kommunikationsendgerät, umfassend:
Empfangen von Nachrichteninformationen, welche von einer Multimedianachrichtendienstzentrale aus einer Multimedianachricht extrahiert wurden (SCHRITT 1),
**gekennzeichnet durch**:
Festlegen einer Datenstromrate und einer Puffergröße abhängig von den empfangenen Nachrichteninformationen (SCHRITT 6, SCHRITT 7) und
Empfangen der Multimedianachricht nach Maßgabe der festgelegten Datenstromrate und Puffergröße.

2. Verfahren nach Anspruch 1, wobei dann, wenn bei dem Schritt der von den empfangenen Nachrichteninformationen abhängigen Festlegung der Datenstromrate und der Puffergröße (SCHRITT 6, SCHRITT 7) die Nachrichteninformationen anzeigen, dass die Multimedianachricht eine unerwünschte Werbenachricht ist oder solche Zweifel bestehen, dass sie als unerwünschte Werbenachricht angesehen wird (SCHRITT 5), die Datenstromrate und die Puffergröße auf erste vordefinierte Werte eingestellt werden (SCHRITT 6), wogegen dann, wenn die Nachrichteninformationen anzeigen, dass die Multimedianachricht keine unerwünschte Werbenachricht ist noch als unerwünschte Werbenachricht angesehen wird, die Datenstromrate und die Puffergröße auf zweite vordefinierte Werte eingestellt werden (SCHRITT 7).

3. Verfahren nach Anspruch 1, wobei der Schritt der von den empfangenen Nachrichteninformationen abhängigen Festlegung der Datenstromrate und der Puffergröße (SCHRITT 6, SCHRITT 7) umfasst:
Empfangen eines von einem Empfänger abhängig von den Nachrichteninformationen ermittelten Ergebnisses, ob die Multimedianachricht eine unerwünschte Werbenachricht ist oder nicht, und
Einstellen der Datenstromrate und der Puffergröße auf erste vordefinierte Werte, falls die Multimedianachricht eine unerwünschte Werbenachricht ist (SCHRITT 6), und
Einstellen der Datenstromrate und der Puffergröße auf zweite vordefinierte Werte, falls die Multimedianachricht keine unerwünschte Werbenachricht ist (SCHRITT 7).

4. Verfahren nach Anspruch 3, wobei die Nachrichteninformationen eine Nachrichtenklasse oder/und einen Nachrichtentyp oder/und eine Sendekennung oder/und eine MMS-Version oder/und eine Nachrichtengröße oder/und ein Verfallsdatum oder/und eine Nachrichtenreferenz oder/und einen Titel oder/und einen Wichtigkeitsgrad oder/und Information über einen Absender enthalten.

5. Verfahren nach Anspruch 1, wobei die Nachrichteninformationen eine Nachrichtenklasse oder/und einen Nachrichtentyp oder/und eine Sendekennung oder/und eine MMS-Version oder/und eine Nachrichtengröße oder/und ein Verfallsdatum oder/und eine Nachrichtenreferenz oder/und einen Titel oder/und einen Wichtigkeitsgrad oder/und Information über einen Absender enthalten.

6. Verfahren nach Anspruch 1, wobei die Nachrichteninformationen in einer Benachrichtigungsnachricht enthalten sind, welche den Empfänger informiert, dass die Multimedianachrichtendienstzentrale die Multimedianachricht empfangen hat.

7. Verfahren nach Anspruch 1, wobei der Schritt des Empfangens der Multimedianachricht nach Maßgabe der festgelegten Datenstromrate und Puffergröße umfasst:
Umwandeln der Multimedianachricht in Streamingdaten durch einen Datenstromserver und
Übertragen der umgewandelten Streamingdaten als Datenstrom nach Maßgabe der festgelegten Datenstromrate und Puffergröße (SCHRITT 8).

8. Verfahren nach Anspruch 7, wobei der Schritt der Umwandlung der Multimedianachricht in Streamingdaten durch den Datenstromserver umfasst:
Umwandeln einer in der Multimedianachricht enthaltenen Multimediadatei in die Streamingdaten.

9. Verfahren nach Anspruch 7, wobei der Schritt des datenstrommäßigen Übertragens der umgewandelten Streamingdaten nach Maßgabe der festgelegten Datenstromrate und Puffergröße (SCHRITT 8) zu einer Paketdatensendeeinheit gehört.

10. Verfahren nach Anspruch 9, wobei die Paketdatensendeeinheit ein GPRS-Dienstunterstützungsknoten, SGSN, ist.

11. Verfahren nach Anspruch 1, ferner umfassend:
Anpassen der Datenstromrate und der Puffergröße gemäß einer Anweisung des Empfängers während der datenstrommäßigen Übertragung der Multimedianachricht.

12. Verfahren nach Anspruch 11, wobei dann, wenn bei dem Schritt der Anpassung der Datenstromrate und Puffergröße während der datenstrommäßigen Übertragung der Multimedianachricht festgestellt wird, dass die Multimedianachricht keine unerwünschte Werbenachricht ist, die Datenstromrate und die Puffergröße erhöht werden.

13. Verfahren nach Anspruch 1, ferner umfassend:
Vergleichen einer Nachrichtengröße aus den in den Nachrichteninformationen enthaltenen Informationen über die Multimedianachricht mit der Größe eines verbleibenden Speicherraums des mobilen Kommunikationsendgeräts und
Empfangen der Multimedianachricht mit einer Streamingmethode, falls die Nachrichtengröße größer als die Größe des verbleibenden Speicherraums ist.

14. Verfahren nach Anspruch 2, wobei die ersten vordefinierten Werte eine minimale Datenstromrate und Puffergröße des mobilen Kommunikationsendgeräts sind und die zweiten vordefinierten Werte eine Basisdatenstromrate und Basispuffergröße des Kommunikationsendgeräts sind.

15. Verfahren nach Anspruch 3, wobei die ersten vordefinierten Werte eine minimale Datenstromrate und Puffergröße des mobilen Kommunikationsendgeräts sind und die zweiten vordefinierten Werte eine Basisdatenstromrate und Basispuffergröße des Kommunikationsendgeräts sind.

16. Benutzerendgerät mit:
einem Transceiver (300) zum Senden und Empfangen von Signalen mit einem Netzwerk,
einem Puffer (310) zum Speichern verschiedener Informationen und
einem Prozessor (320), welcher mit dem Transceiver (300) und dem Puffer (310) zusammenarbeitet, um in einem Multimedianachrichtendienstempfangsmodus zu arbeiten, der **gekennzeichnet ist durch**:
Empfangen von Nachrichteninformationen, welche von dem Netzwerk aus einer Multimedianachricht extrahiert wurden,
Festlegen einer Datenstromrate und einer Puffergröße abhängig von den empfangenen Nachrichteninformationen und
Empfangen der Multimedianachricht nach Maßgabe der festgelegten Datenstromrate und Puffergröße.

17. Endgerät nach Anspruch 16, wobei das Festlegen automatisch von dem Prozessor (320) oder bei Empfang einer Benutzereingabe ausgeführt wird.

18. Endgerät nach Anspruch 17, wobei dann, wenn die Benutzereingabe anzeigt, dass die Multimedianachricht unerwünschten Inhalt hat, der Prozessor (320) die Datenstromrate und die Puffergröße auf ihre minimalen Werte einstellt.

19. Endgerät nach Anspruch 17, wobei dann, wenn die Benutzereingabe anzeigt, dass die Multimedianachricht unerwünschten Inhalt hat, eine optimale Datenstromrate und Puffergröße abhängig von Bedingungen des Benutzerendgeräts und Bedingungen des Netzwerks bestimmt werden.

20. Endgerät nach Anspruch 17, wobei der Prozessor (320) die Nachrichteninformationen prüft und dann, wenn die Multimedianachricht unerwünschten Inhalt hat, die Datenstromrate und die Puffergröße automatisch auf ihre minimalen Werte eingestellt werden und die Multimedianachricht mit einer Streamingmethode empfangen wird.

21. Endgerät nach Anspruch 17, wobei es dem Benutzer ermöglicht ist, die Nachrichteninformationen zu prüfen und dann, wenn die Multimedianachricht unerwünschten Inhalt hat, die Datenstromrate und die Puffergröße vom Benutzer festgelegt werden und die Multimedianachricht mit einer Streamingmethode empfangen wird.

22. Endgerät nach Anspruch 17, wobei der Prozessor (320) die Nachrichteninformationen prüft und dann, wenn die Multimedianachricht möglicherweise unerwünschten Inhalt hat, die Datenstromrate und die Puffergröße anfänglich auf ihre minimalen Werte eingestellt werden und die Multimedianachricht mit einer Streamingmethode empfangen wird.

23. Endgerät nach Anspruch 22, wobei die minimalen Werte später automatisch oder vom Benutzer während des Streamingempfangs auf höhere Werte eingestellt werden können, falls die Multimedianachricht keinen unerwünschten Inhalt hat, oder es kann die Streamingmethode abgebrochen werden, falls die Multimedianachricht unerwünschten Inhalt hat.

24. Endgerät nach Anspruch 17, wobei dann, wenn die Multimedianachricht keinen unerwünschten Inhalt hat, eine Streamingmethode eingesetzt wird, um die Multimedianachricht zu empfangen, wobei eine optimale Datenstromrate und Puffergröße abhängig von Bedingungen des Benutzerendgeräts und Bedingungen des Netzwerks festgelegt werden oder eine vordefinierte Datenstromrate und Puffergröße benutzt werden.

25. Endgerät nach Anspruch 16, wobei der Prozessor (320) ferner mit dem Transceiver (300) und dem Puffer (310) zusammenarbeitet, um in einem Multimedianachrichtendienstsendemodus mit den Schritten zu arbeiten:
Verfassen einer Multimedianachricht und
Senden der verfassten Multimedianachricht über das Netzwerk an ein anderes Benutzerendgerät.

## Revendications

1. Procédé de service de messagerie multimédia d'un terminal de communication mobile comprenant :
de recevoir des informations de message extraites d'un message multimédia par un centre de service de messagerie multimédia (ÉTAPE 1) **caractérisé par** les étapes consistant à :
définir un débit de lecture en transit et une taille de tampon sur la base des informations de message reçues (ÉTAPE 6, ÉTAPE 7) ; et
recevoir le message multimédia conformément au débit de lecture en transit et à la taille de tampon définis.

2. Procédé selon la revendication 1, dans lequel, lors de l'étape de définition du débit de lecture en transit et de la taille de tampon sur la base des informations de message reçues (ÉTAPE 6, ÉTAPE 7), si les informations de message indiquent que le message multimédia est un pourriel ou est soupçonné d'être considéré comme un pourriel (ÉTAPE 5), le débit de lecture en transit et la taille de tampon sont fixés à des premières valeurs prédéfinies (ÉTAPE 6), tandis que si les informations de message indiquent que le message multimédia n'est ni un pourriel, ni considéré comme un pourriel, le débit de lecture en transit et la taille de tampon sont fixés à des deuxièmes valeurs prédéfinies (ÉTAPE 7).

3. Procédé selon la revendication 1, dans lequel l'étape de définition du débit de lecture en transit et de la taille de tampon sur la base des informations de message reçues (ÉTAPE 6, ÉTAPE 7) comprend :
de recevoir un résultat déterminé par un destinataire quant à savoir si le message multimédia est un pourriel ou non sur la base des informations de message ; et
de définir le débit de lecture en transit et la taille de tampon comme des premières valeurs prédéfinies si le message multimédia est un pourriel (ÉTAPE 6), et de définir le débit de lecture en transit et la taille de tampon comme des deuxièmes valeurs prédéfinies si le message multimédia n'est pas un pourriel (ÉTAPE 7).

4. Procédé selon la revendication 3, dans lequel les informations de message incluent au moins un ou plusieurs d'une classe de message, d'un type de message, d'un identifiant de transmission, d'une version MMS, d'une taille de message, d'une date d'expiration, d'une référence de message, d'un titre, d'un niveau d'importance, d'une information sur un expéditeur.

5. Procédé selon la revendication 1, dans lequel les informations de message incluent au moins un ou plusieurs d'une classe de message, d'un type de message, d'un identifiant de transmission, d'une version MMS, d'une taille de message, d'une date d'expiration, d'une référence de message, d'un titre, d'un niveau d'importance, d'une information sur un expéditeur.

6. Procédé selon la revendication 1, dans lequel les informations de message sont incluses dans un message de notification informant le destinataire que le centre de service de messagerie multimédia a reçu le message multimédia.

7. Procédé selon la revendication 1, dans lequel l'étape de réception du message multimédia conformément au débit de lecture en transit et à la taille de tampon définis comprend :
de convertir le message multimédia en des données de lecture en transit par l'intermédiaire d'un serveur de lecture en transit ; et
de lire les données de lecture en transit converties conformément au débit de lecture en transit et à la taille de tampon définis (ÉTAPE 8).

8. Procédé selon la revendication 7, dans lequel l'étape de conversion du message multimédia en des données de lecture en transit par l'intermédiaire d'un serveur de lecture en transit comprend :
de convertir un fichier multimédia inclus dans le message multimédia en les données de lecture en transit.

9. Procédé selon la revendication 7, dans lequel l'étape de lecture en transit des données de lecture en transit converties conformément au débit de lecture en transit et à la taille de tampon définis (ÉTAPE 8) est associée avec une unité de transmission de données par paquets.

10. Procédé selon la revendication 9, dans lequel l'unité de transmission de données par paquets est un noeud de support GPRS de service (SGSN).

11. Procédé selon la revendication 1, comprenant en outre :
d'ajuster le débit de lecture en transit et la taille de tampon conformément à une instruction du destinataire tandis que le message multimédia est en cours de lecture en transit.

12. Procédé selon la revendication 11, dans lequel, lors de l'étape d'ajustement du débit de lecture en transit et de la taille de tampon, lorsque le message multimédia est déterminé ne pas être un pourriel tandis que le message multimédia est en cours de lecture en transit, le débit de lecture en transit et la taille de tampon sont ajustés à l'augmentation.

13. Procédé selon la revendication 1, comprenant en outre :
de comparer une taille de message parmi les informations du message multimédia incluses dans les informations de message avec une taille d'un espace restant d'une mémoire du terminal de communication mobile ; et
de recevoir le message multimédia conformément à un procédé de lecture en transit lorsque la taille du message est supérieure à la taille de l'espace restant de la mémoire.

14. Procédé selon la revendication 2, dans lequel les premières valeurs prédéfinies sont un débit de lecture en transit et une taille de tampon minimum du terminal de communication mobile et les deuxièmes valeurs prédéfinies sont un débit de lecture en transit et une taille de tampon de base du terminal de communication mobile.

15. Procédé selon la revendication 3, dans lequel les premières valeurs prédéfinies sont un débit de lecture en transit et une taille de tampon minimum du terminal de communication mobile et les deuxièmes valeurs prédéfinies sont un débit de lecture en transit et une taille de tampon de base du terminal de communication mobile.

16. Terminal utilisateur comprenant :
un émetteur-récepteur (300) pour émettre et recevoir des signaux avec un réseau ;
un tampon (310) pour stocker diverses informations ; et
un processeur (320) coopérant avec l'émetteur-récepteur (300) et le tampon (310) pour fonctionner en un mode de réception de service de messagerie multimédia **caractérisé par** les étapes consistant à :
recevoir des informations de message extraites d'un message multimédia par le réseau
définir un débit de lecture en transit et une taille de tampon sur la base des informations de message reçues, et
recevoir le message multimédia conformément au débit de lecture en transit et à la taille de tampon définis.

17. Terminal selon la revendication 16, dans lequel la définition est effectuée automatiquement par le processeur (320) ou effectuée à la réception d'une entrée de l'utilisateur.

18. Terminal selon la revendication 17, dans lequel, si l'entrée de l'utilisateur indique que le message multimédia contient un contenu indésirable, le processeur (320) fixe le débit de lecture en transit et la taille de tampon à leurs valeurs minimum.

19. Terminal selon la revendication 17, dans lequel, si l'entrée de l'utilisateur indique que le message multimédia contient un contenu indésirable, un débit de lecture en transit et une taille de tampon optimum sont déterminés conformément aux conditions du terminal utilisateur et aux conditions du réseau.

20. Terminal selon la revendication 17, dans lequel le processeur (320) contrôle les informations de message, et si le message multimédia contient un contenu indésirable, le débit de lecture en transit et la taille de tampon sont automatiquement fixés à leurs valeurs minimum et le message multimédia est reçu par l'intermédiaire d'un procédé de lecture en transit.

21. Terminal selon la revendication 17, dans lequel l'utilisateur est autorisé à contrôler les informations de message, et si le message multimédia contient un contenu indésirable, le débit de lecture en transit et la taille de tampon sont fixés par l'utilisateur et le message multimédia est reçu par l'intermédiaire d'un procédé de lecture en transit.

22. Terminal selon la revendication 17, dans lequel le processeur (320) contrôle les informations de message, et si le message multimédia contient potentiellement un contenu indésirable, le débit de lecture en transit et la taille de tampon sont initialement fixés à leurs valeurs minimum et le message multimédia est reçu par l'intermédiaire d'un procédé de lecture en transit.

23. Terminal selon la revendication 22, dans lequel les valeurs minimum peuvent être ultérieurement ajustées automatiquement ou par l'utilisateur à des valeurs supérieures pendant la réception en lecture en transit si le message multimédia ne contient pas de contenu indésirable, ou bien le procédé de lecture en transit peut être stoppé si le message multimédia contient un contenu indésirable.

24. Terminal selon la revendication 17, dans lequel si le message multimédia ne contient pas de contenu indésirable, un procédé de lecture en transit est utilisé en recevant le message multimédia, et un débit de lecture en transit et une taille de tampon optimum sont déterminés conformément aux conditions du terminal utilisateur et aux conditions du réseau, ou bien un débit de lecture en transit et une taille de tampon prédéfinis sont utilisés.

25. Terminal selon la revendication 16, dans lequel le processeur (320) coopère en outre avec l'émetteur-récepteur (300) et le tampon (310) pour fonctionner en un mode de transmission de service de messagerie multimédia comprenant les étapes consistant à :
composer un message multimédia, et
envoyer le message multimédia composé à un autre terminal utilisateur par l'intermédiaire du réseau.
